# EUROPÄISCHE PATENTSCHRIFT

(11) **EP 0 989 946 B1**
(45) Veröffentlichungstag und Bekanntmachung des Hinweises auf die Patenterteilung: **17.09.2003**
(21) Anmeldenummer: 98936336.1
(22) Anmeldetag: 12.06.1998
(51) Int. Cl.: B65D 90/02, B65D 90/06

(54) **UNTERIRDISCHER, MEHRSCHICHTIGER BEHÄLTER HERGESTELLT DURCH ROTATIONSVERFAHREN**
UNDERGROUND MULTILAYER TANK PRODUCED BY A ROTATION METHOD
RESERVOIR SOUTERRAIN MULTICOUCHE FABRIQUE SUIVANT UN PROCEDE PAR ROTATION

(30) Priorität: 19.06.1997 LU 90083
(43) Veröffentlichungstag der Anmeldung: 05.04.2000
(73) Patentinhaber: RAVINIC S.à.r.l., 9466 Weiler (LU)
(72) Erfinder: Plein, Victor, 9466 Weiler (LU); Schmit, Nico, 9835 Hoscheid (LU); Cremer, Ralf, 9805 Hosingen (LU)
(74) Vertreter: Kihn, Pierre Emile Joseph
(86) Internationale Anmeldenummer: EP9803567
(87) Internationale Veröffentlichungsnummer: WO98058855

(56) Entgegenhaltungen:
- AT-B- 398 190
- GB-A- 2 188 360
- US-A- 5 450 975

## Beschreibung

Die vorliegende Erfindung betrifft einen mehrschichtigen Behälter in verschiedenen Größen und Formen.

Für in das Erdreich einzubettende Heizöltanks oder Chemikalientanks, im folgenden kurz als Erdtank bezeichnet, gelten besonders strenge Sicherheitsvorschriften, da Leckagen zum Austritt von Heizöl bzw. von Chemikalien in das Erdreich führen würden, was zu ernsten Umweltschäden, insbesondere durch Grundwasserverseuchung, führen kann.

Man kann Erdtanks in zwei Arten einteilen nämlich in doppel- bzw. mehrwandige Behälter gemäß der zu Beginn genannten Art und in einwandige Behälter.

Doppelwandige Tanks werden mit einer Leckanzeigevorrichtung ausgerüstet, die sowohl ein Leck im Innenbehälter als auch ein Leck im Außenbehälter anzeigt. Erst wenn beide Behälter gleichzeitig lecken, kann Öl bzw. Chemikalien in das Erdreich austreten. Wenn die Leckanzeigevorrichtung eine Leckage anzeigt, wird der Behälter möglichst rasch entleert und der Schaden behoben. Das gleichzeitige Entstehen von Lecks im Innenbehälter und im Außenbehälter ist unter normalen Umständen so unwahrscheinlich, daß es außer Betracht bleiben kann. Durch die Leckanzeige sind doppelwandige Behälter so sicher, daß eine regelmäßige Kontrolle nicht nötig ist.

Andere Erdtanks hingegen, die nicht doppelwandig und mit einem Kontrollspalt versehen sind, z.B. Tanks aus Beton mit fest aufgebrachter Schicht aus glasfaserverstärktem Kunststoff (GfK-Schicht) oder einwandige Tanks aus glasfaserverstärktem Kunststoff, müssen alle 5 Jahre sorgfältig überprüft werden, wozu die Tanks vollständig zu entleeren sind und begangen werden müssen. Solche Kontrollen sind umständlich und entsprechend teuer.

Bekannt sind doppelwandige Erdtanks aus Stahlblech. Auf einen dichten, geschweißten Innenbehälter ist ein dichter, geschweißter Außenbehälter dadurch aufgebracht, daß er abschnittsweise um den Innenbehälter herum fertiggeschweißt wird. Die bei dieser Konstruktion anfallenden Probleme sind die Innen-korrosion durch säurehaltige Sinkstoffe im Öl und die Außenkorrosion durch säurehaltige Böden, da die übliche Isolierung, z.B. Bitumen, bei der Einlagerung des Tanks in das Erdreich zu leicht beschädigt wird.

Bekannt sind ferner Erdtanks mit einem Außenbehälter aus Stahlblech und einem Innenbehälter in Form einer Blase aus einer ölfesten Kunststoffolie. Die Montage der Blase ist problematisch. Die Blase kann wegen ihrer relativ geringen Festigkeit leicht reißen. Diese Gefahr besteht insbesondere bei fehlerhafter Montage der Blase. Hierbei treten ebenfalls die Probleme der Außenkorrosion aus den gleichen Gründen wie oben auf.

Bekannt sind weiterhin doppelwandige sphärische Erdtanks, die aus einer inneren Schicht aus GfK einer porösen Zwischenschicht aus mit Kunstharz verklebtem Einkornsand gröberer Struktur sowie einer äußeren Schicht wieder aus GfK besteht. Die GfK-Schichten übernehmen die Abdichtung nach innen und außen, während die Zwischenschicht als Traggerüst und Leckkontrollraum dient. Nachteil hierbei ist der hohe GfK-Anteil, der die Kosten erhöht.

US-5,450,975 offenbart einen mehrschichtigen Behälter, der eine Innewand aus Stahl und eine Aussenwand aus thermoplastichem Kunststoff umfaßt. Zwischen der Aussenwand und der Innenwand besteht ein Hohlraum, wobei die Aussenwand durch eine Reihe von Vertiefungen in der Aussenwand mit der Innenwand verbunden ist.

### Aufgabe der Erfindung

Aufgabe der vorliegenden Erfindung ist es folglich, einen Lagerbehälter der zu Beginn genannten Art vorzuschlagen, der durch geeignete Materialwahl für Innenund Außenbehälter eine maximale Sicherheit gewährleistet.

### Allgemeine Beschreibung der Erfindung

Diese Aufgabe wird erfindungsgemäß gelöst durch einen mehrschichtigen Behälter, der eine Innenwand aus Stahl oder o.ä. umfaßt und der dadurch gekennzeichnet ist, daß auf der Außenseite der Innenwand eine durchgehende Doppelwand aus thermoplastischem Kunststoff aufgebracht und daß die Doppelwand einen Hohlraum aufweist.

Ein Vorteil des erfindungsgemäßen Tanks besteht darin, daß die Außenwand durchgehend ist und so keine Dichtungsprobleme in den Schweißnähten auftreten können. Die Außenwand ist eigentlich ein doppelwandiger Plastikbehälter mit einem Hohlraum zwischen den beiden Wänden. Dabei ist hevorzustreichen, daß beide Teile der Außenwand durchgehend sind und keine Schweißnähte aufweisen. Die Stabilität des Behälters wird durch eine Innenwand aus Stahl o. ä. gewährleistet. Dazu ist zu bemerken, daß diese Innenwand aus Stahl o.ä. aus verschiedenen Stücken zusammengesetzt werden kann, die dann miteinander verschweißt werden. Die Dichtheit dieser Schweißnähte ist nicht kritisch! Die Innenwand dient eigentlich eher als Stütze oder als Verstärkungsmaterial als als Gefäß.

Der erfindungsgemäße, mehrwandige Lagerbehälter ist demnach so ausgebildet, daß eine maximale Sicherheit erreicht wird. Weiterhin ist die eine Einlagerung des erfindungsgemäßen, mehrwandigen Lagerbehälters als Erdtanks in den Boden einfach und kann problemlos vorgenommen werden. Die erfindungsgemäßen Lagerbehälter sind billiger herstellbar als bekannte Erdtanks. Gemäß einer ersten bevorzugten Ausführung ist der Hohlraum in der Doppelwand durchgehend. In diesem Hohlraum kann dann die Leckanzeige angebracht werden.

Der Hohlraum in der Doppelwand kann einen Füllstoff enthalten, der vorzugsweise aus der Gruppe bestehend aus grobkörnigen Füllstoffen und aufschäumbaren Stoffen ausgesucht ist.

Der thermoplastische Kunststoff kann einen oder mehrere der Polymere aus der Gruppe LDPE, LLDPE, HDPE, PP, PVC, PS, SAN, EVA, und EAA umfassen.

Um die Innenkorrosion an der Innenwand aus Stahl möglichst gering zu halten, kann eine Schutzschicht auf die Innenseite des Stahlbehälters aufgebracht werden. Diese Schutzschicht kann entweder einen rostbeständigen Anstrich oder aber eine Verkleidung aus Kunststoff umfassen.

Um eine optimale Haftung bzw. Verbindung zwischen der Innenwand aus Stahl und der außenliegenden Doppelwand zu gewährleisten, kann die Innenwand entweder mit einem Haftvermittler behandelt werden oder aber es können, Verankerungsmittel auf der Innenwand angebracht werden, die in die an der Innenwand anliegenden Kunstoffwand eingreifen.

Die Innenwand des Behälters kann aber auch z.B. aus Blei hergestellt werden. Ein solcher Behälter eignet sich dann für die Einlagerung von radioaktiven Flüssigkeiten.

Die Erfindung betrifft weiterhin ein Verfahren zur Herstellung eines mehrwandigen Behälters, wobei die Innenwand des Behälters derartig in eine Form eingespannt wird, daß zwischen der Form und der Innenwand ein Hohlraum bleibt und dann ein thermoplastischer Kunststoff in den Hohlraum zwischen der Innenwand und der Form eingegeben wird. Anschließend wird die Form aufgeheizt, bis der Kunststoff flüssig wird und die Form in alle Richtungen gedreht wird, so daß sich der Kunststoff in einer regelmäßigen Schicht an der Form und an der Innenwand verteilt und dort zu einer durchgehenden Schicht erstarrt und eine Doppelwand mit einem Hohlraum bildet. Danach wird der so geformte mehrschichtige Behälter abgekühlt und aus der Form entfernt.

### Beschreibung anhand der Figuren

Im Folgenden wird nun eine Ausgestaltung der Erfindung anhand der beiliegenden Figuren beschrieben. Es zeigen:
- Fig.1:: einen mehrschichtigen Behälter, der eine Innenwand aus Stahl oder o.ä. umfaßt, auf deren Außenseite eine durchgehende Doppelwand aus thermoplastischem Kunststoff aufgebracht ist, die einen Hohlraum aufweist,
- Fig.2:: den Ausschnitt X1 aus der Fig. 1

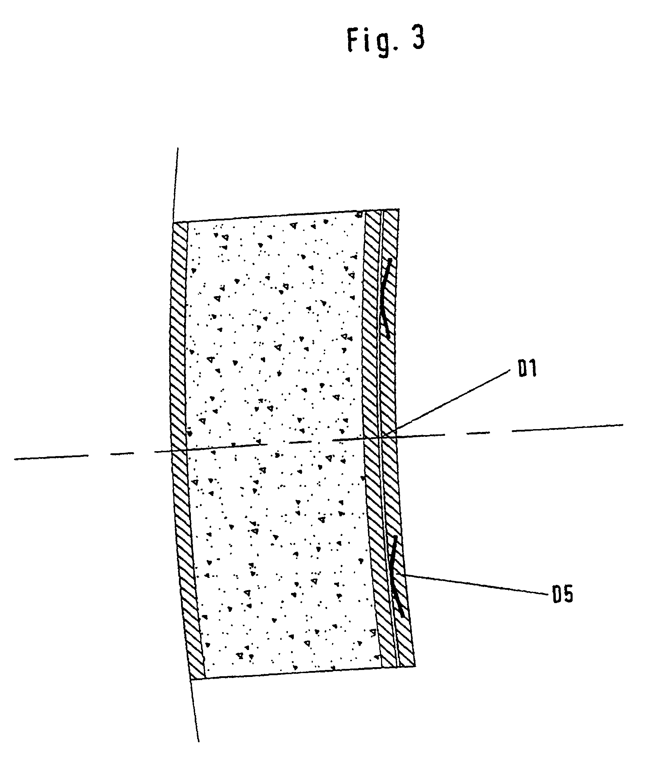

- Fig.3:: den Ausschnitt X2 aus der Fig. 1

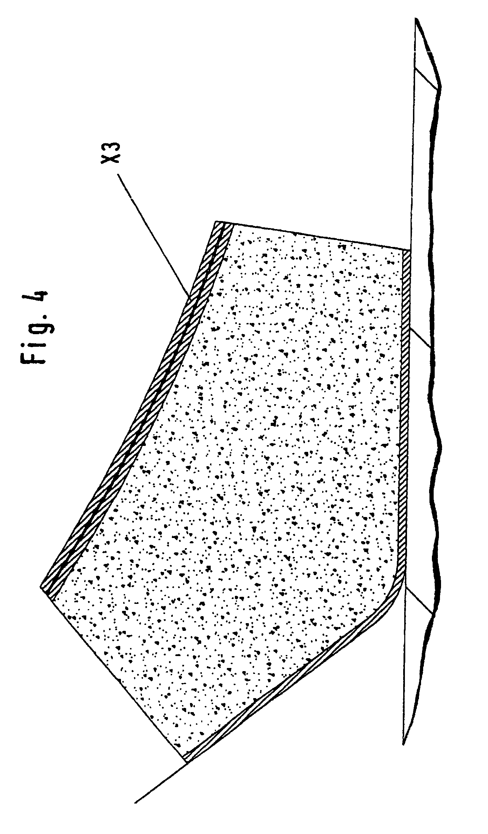

- Fig.4:: den Ausschnitt X3 aus der Fig. 1
- Fig.5:: eine Rotationsformmaschine

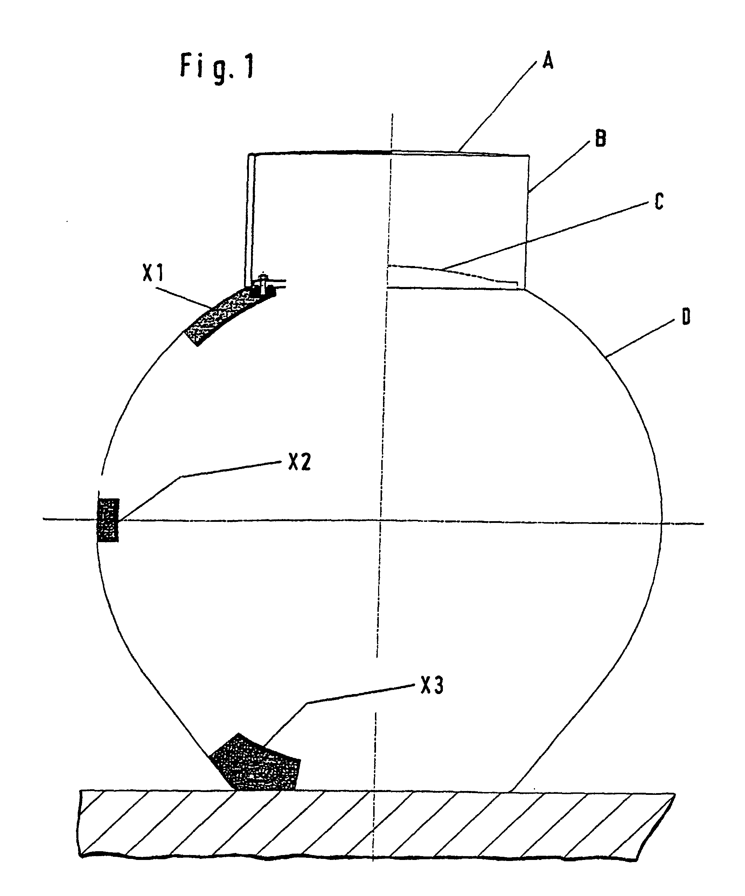

Die Fig.1 zeigt einen mehrschichtigen Behälter D, der eine Innenwand D1 aus Stahl oder o.ä. umfaßt, auf deren Außenseite eine durchgehende Doppelwand D2a aus thermoplastischem Kunststoff aufgebracht ist, die einen Hohlraum D3 aufweist. Der Behälter D begreift einen kugelförmigen Körper, der einen Behälterdeckel C in seinem oberen Teil aufweist. Es handelt sich hier um einen Standarddeckel, der - je nach Bedarf - mit einer Meßleitung, einer Saugleitung, einem Pfeilstab, einer Entlüftung, einer Überfüllsicherung, einer Füllstandanzeige, einem Befüllungsstutzen bestückt sein kann.

Der Deckel C des Behälters D ist mit einem Domschacht B umgeben, der seinerseits mit einer begehbaren Domschachtabdeckung A versehen ist.

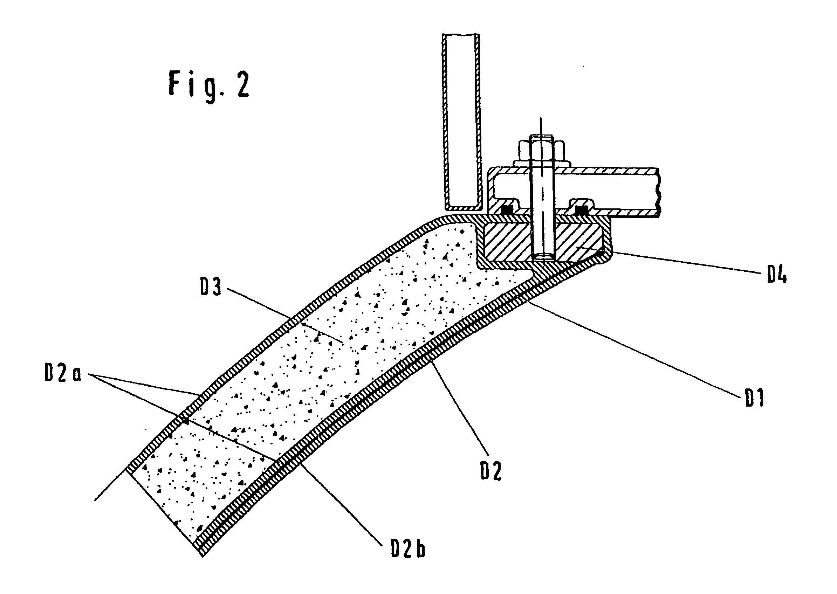

Die Fig.2 zeigt den Ausschnitt X1 aus der Fig. 1, woraus die Verbindung zwischen dem Domschacht B und dem Behälter D ersichtlich ist.

Die Innenwand D1 des Behälters D kann z.B. aus zwei Halbschalen bestehen, die durch Schutzgasschweißen miteinander verbunden sind. Ein aus mehreren Teilen oder aus einem Teil bestehender Flanschring D4 wird mit dem Behälter verbunden. Auf diesen Flanschring kann dann der Deckel angebracht werden.

Die Innenwand D1 ist von einer Doppelwand D2a umgeben, die einen Hohlraum D3 aufweist. Der Hohlraum D3 ist mit einem Medium z.B. einem grobkörnigen Füllstoff (Stein, Lava, Kies ....), Kunstoffrecyclingprodukte oder mit Polyurethanschaum aufgefüllt, um eine höhere Stabilität zu gewährleisten.

Die Befüllung des Hohlraums kann aber auch dazu genutzt werden, um verschiedene Eigenschaften im Hinblick auf verschiedene Einsatzmöglichkeiten zu verbessern.

Polyurethanschaum kann zum Beispiel benutzt werden, wenn thermische Isolationseingeschaften verbessert werden sollen. Dadurch kann der Behälter zum Lagern von warmen oder kalten Flüssigkeiten genutzt werden.

Kunstoffrecyclingprodukte eignen sich zu einer Lecküberwachung durch Vakuum besonders gut, weil sie porös, luft- und feuchtigkeitsdurchlässig sind.

In der auf dieser Figur dargestellten Ausführung ist der Behälter mit einer inneren Schutzschicht D2b versehen, die die Innenwand aus Stahl vor Korrosion schützt.

Die Innenwand kann jedoch auch aus einem anderen Material z.B. Kupfer, Blei, Zink, GfK, Beton bestehen. Die Innenwand ist eigentlich nur eine verlorene Schalung für den Behälter.

Der Ausschnitt X2 aus der Fig. 1 zeigt Blechhaken, die an der Innenwand aus Stahl angebracht sind und die innere Schutzschicht eingreifen und sie mit der Innenwand verbinden.

Ähnliche Blechhaken können natürlich auch außen auf die Innenwand aufgeschweißt oder sonstwie befestigt werden, um die Doppelwand fest mit der Innenwand zu verbinden.

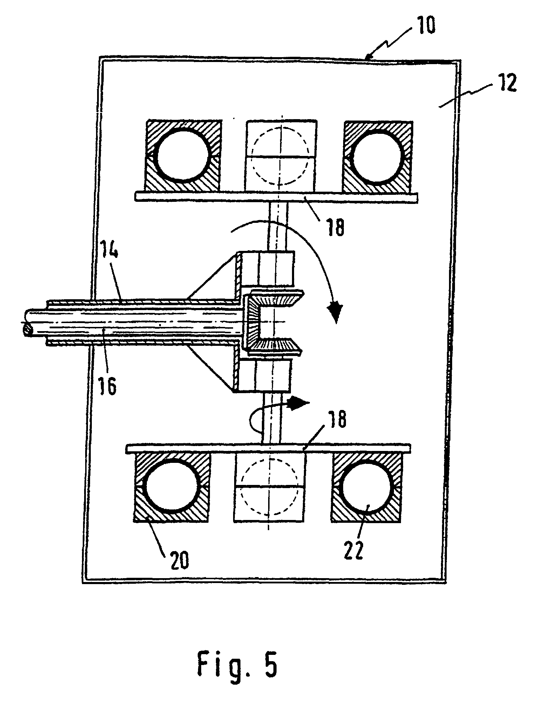

Die Fig. 5 zeigt eine Rotationsformmaschine 10, die eine beheizte Wärmekammer 12 aufweist. In diese Wärmekammer ragt eine Hohlwelle 14 hinein, durch die eine Innenwelle in die Wärmekammer 12 geführt wird.

An dieser Innenwelle 16 sind mehrere Formteller 18 befestigt, die um die Achse der Innenwelle 16 und gleichzeitig um Ihre eigene Achse drehbar gelagert sind. Auf diesen Formtellern 18 sind mehrere Formen 20 angebracht, worin sich je ein Formteil 22 befindet.

Das Rotationsverfahren ist ein Verfahren zur Herstellung verhältnismäßig großer, geschlossener oder offener, auch unregelmäßig gestalteter Hohlkörper aus pasten- oder pulverförmigen Thermoplasten. Das Rotationsformen findet vorwiegend dort Anwendung, wo die Grenzen des Hohlkörperblasens überschritten werden. Der Rohstoff (z. B. PVC-Paste oder PE-Pulver) wird in die Form gefüllt. Diese wird in einer Wärmekammer erhitzt und in langsame Rotation um mehrere Achsen versetzt. Dadurch verteilt sich der Rohstoff und es bildet sich an den Formwänden eine annähernd gleichmäßige Schichtdicke. Nach einer bestimmten Schmelzzeit wird gekühlt und es kann entformt werden.

Durch das drucklose Verfahren (die Zentrifugalkräfte werden niedrig gehalten) können auch große Formteile nahezu spannungsfrei und mit ausreichender Wanddicke ohne nennenswerte Wanddickenunterschiede hergestellt werden.

Gängige Rotationsformmaschinen stehen für Teile bis 2000 mm Durchmesser und 2500 mm Länge zur Verfügung. Es können problemlos Hohlkörper bis zu einem Volumen von 15000 I hergestellt werden.

## Patentansprüche

1. Mehrschichtiger Behälter, der eine Innenwand aus Stahl oder o.ä. umfaßt **dadurch gekennzeichnet, daß** auf der Außenseite der Innenwand eine durchgehende Doppelwand aus thermoplastischem Kunststoff aufgebracht und daß die Doppelwand einen Hohlraum aufweist.

2. Behälter nach Anspruch 1 **dadurch gekennzeichnet, daß** der Hohlraum in der Doppelwand durchgehend ist.

3. Behälter nach einem der vorhergehenden Ansprüche **dadurch gekennzeichnet, daß** der Hohlraum in der Doppelwand einen Füllstoff enthält.

4. Behälter nach Anspruch 1 **dadurch gekennzeichnet, daß** der Füllstoff aus der Gruppe bestehend aus grobkörnigen Füllstoffen und aufschäumbaren Stoffen ausgesucht ist.

5. Behälter nach einem der vorhergehenden Ansprüche **dadurch gekennzeichnet, daß** der thermoplastische Kunststoff einen oder mehrere der Polymere aus der Gruppe LDPE, LLDPE, HDPE, PP, PVC, PS, SAN, EVA, und EAA umfaßt.

6. Behälter nach einem der vorhergehenden Ansprüche **dadurch gekennzeichnet, daß** die Innenwand aus Stahl mehrere zusammensetzbare Teile umfaßt.

7. Behälter nach einem der vorhergehenden Ansprüche **dadurch gekennzeichnet, daß** die Innenwand aus Stahl eine innere Schutzschicht aufweist.

8. Behälter nach einem der vorhergehenden Ansprüche **dadurch gekennzeichnet, daß** die Innenwand aus Stahl Verankerungsmittel für die Doppelwand aufweist.

9. Verfahren zur Herstellung eines Behälters nach einem der Ansprüche 1 bis 8 **dadurch gekennzeichnet, daß** die Innenwand des Behälters derartig in eine Form eingespannt wird, daß zwischen der Form und der Innenwand ein Hohlraum bleibt, daß ein thermoplastischer Kunststoff in den Hohlraum zwischen der Innenwand und der Form eingegeben wird, daß die Form aufgeheizt wird, bis der Kunststoff flüssig wird, daß die Form in alle Richtungen gedreht wird, so daß sich der Kunststoff in einer regelmäßigen Schicht einerseits an der Form und andererseits an der Innenwand verteilt und dort jeweils zu einer durchgehenden Schicht erstarrt und so eine Doppelwand mit einem Hohlraum bildet und daß der so geformte mehrschichtige Behälter abgekühlt wird und aus der Form gelöst wird.

## Claims

1. Multilayer tank which comprises an inner wall made of steel or the like, **characterized in that** a continuous double wall made of thermoplastic material is provided on the outer side of the inner wall and **in that** the double wall has a cavity.

2. Tank according to Claim 1, **characterized in that** the cavity in the double wall is continuous.

3. Tank according to one of the preceding claims, **characterized in that** the cavity in the double wall contains a filler.

4. Tank according to Claim 1, **characterized in that** the filler is selected from the group comprising coarse-grained fillers and expandable materials.

5. Tank according to one of the preceding claims, **characterized in that** the thermoplastic material comprises one or more of the polymers from the group LDPE, LLDPE, HDPE, PP, PVC, PS, SAN, EVA and EAA.

6. Tank according to one of the preceding claims, **characterized in that** the inner wall made of steel comprises a number of parts which can be put together.

7. Tank according to one of the preceding claims, **characterized in that** the inner wall made of steel has an inner protective layer.

8. Tank according to one of the preceding claims, **characterized in that** the inner wall made of steel has anchoring means for the double wall.

9. Method for producing a tank according to one of Claims 1 to 8, **characterized in that** the inner wall of the tank is clamped in a mould in such a way that a cavity remains between the mould and the inner wall, **in that** a thermoplastic material is introduced into the cavity between the inner wall and the mould, **in that** the mould is heated up until the polymer material becomes liquid, **in that** the mould is turned in all directions so that the polymer material is distributed in a regular layer on the one hand on the mould and on the other hand on the inner wall, where it respectively solidifies to form a continuous layer and thus forms a double wall with a cavity, and **in that** the multilayer tank formed in this way is cooled down and released from the mould.

## Revendications

1. Réservoir multicouche comprenant une paroi intérieure en acier ou autre matériau de ce genre, **caractérisé en ce que** sur la face extérieure de la paroi intérieure est appliquée une double paroi continue en matière synthétique thermoplastique et **en ce que** ladite double paroi présente un espace vide.

2. Réservoir selon la revendication 1, **caractérisé en ce que** l'espace vide de la double paroi est continu.

3. Réservoir selon l'une des revendications précédentes, **caractérisé en ce que** l'espace vide de la double paroi contient un matériau de remplissage.

4. Réservoir selon la revendication 1, **caractérisé en ce que** le matériau de remplissage est choisi dans le groupe composé des matériaux de remplissage à grosse granulométrie et des matériaux moussants.

5. Réservoir selon l'une des revendications précédentes, **caractérisé en ce que** la matière synthétique thermoplastique comprend un ou plusieurs polymères du groupe des LDPE, LLDPE, HDPE, PP, PVC, PS, SAN, EVA et EAA.

6. Réservoir selon l'une des revendications précédentes, **caractérisé en ce que** la paroi intérieure en acier comprend plusieurs pièces assemblables.

7. Réservoir selon l'une des revendications précédentes, **caractérisé en ce que** la paroi intérieure en acier présente une couche intérieure de protection.

8. Réservoir selon l'une des revendications précédentes, **caractérisé en ce que** la paroi intérieure en acier présente des moyens d'ancrage pour la double paroi.

9. Procédé de fabrication d'un réservoir selon l'une des revendication 1 à 8, **caractérisé en ce que** la paroi intérieure du réservoir est serrée de manière telle dans une forme qu'entre ladite forme et la paroi intérieure subsiste un espace vide, **en ce qu'**une matière synthétique thermoplastique est introduite dans ledit espace vide compris entre la paroi intérieure et la forme, **en ce que** la forme est chauffée jusqu'à ce que la matière synthétique se liquéfie, **en ce que** la forme est tournée dans toutes les directions de manière telle que la matière synthétique se répartit en une couche régulière sur la forme, d'une part, et sur la paroi intérieure, d'autre part et s'y solidifie dans chaque cas pour former une couche continue de manière à constituer une double paroi avec un espace vide, et **en ce que** le réservoir multichouche ainsi formé est refroidi et retiré de la forme.
